# EUROPEAN PATENT APPLICATION

(11) **EP 2 808 081 A1**
(43) Date of publication of application: **03.12.2014**
(21) Application number: 12866715.1
(22) Date of filing: 05.12.2012
(51) Int. Cl.: B01J 27/053, B01D 53/94, F01N 3/10, F01N 3/28

(54) **ALUMINA MATERIAL CONTAINING BARIUM SULFATE AND EXHAUST GAS PURIFYING CATALYST USING SAME**

(30) Priority: 23.01.2012 JP 2012010690
(71) Applicant: N.E. Chemcat Corporation, Tokyo 105-6124 (JP)
(72) Inventor: FUJIMURA Takehiro, Numazu-shi Shizuoka 410-0314 (JP); TAKAHASHI Yoshinori, Numazu-shi Shizuoka 410-0314 (JP); NAGASHIMA Ken, Numazu-shi Shizuoka 410-0314 (JP); TAKAYAMA Akito, Numazu-shi Shizuoka 410-0314 (JP); KANNO Yasuharu, Numazu-shi Shizuoka 410-0314 (JP)
(74) Representative: Müller-Boré & Partner Patentanwälte PartG mbB
(86) International application number: PCT/JP2012/081472
(87) International publication number: WO 2013/111457

(57) **Abstract**

The present invention discloses an alumina material including a barium sulfate, a catalyst or an adsorbent using the same, in particular, a catalyst for exhaust gas purification superior in NOₓ purification performance, suitable as a catalyst for purifying harmful substances included in exhaust gas discharged from an internal combustion engine of a gasoline vehicle, a diesel vehicle or the like.

An alumina material containing a barium sulfate in an amount of 5 to 70% by mass to alumina, wherein average particle size of barium sulfate dispersing in the alumina material is 4 µm or smaller, average particle size of alumina is 50 µm or smaller, and BET specific surface area of the alumina material is 20 to 250 m²/g; a catalyst for exhaust gas purification using the alumina material including a barium sulfate, or the like. It is preferable that the alumina material including a barium sulfate is coated onto an integrated structure-type carrier, as a catalyst layer.

## Description

### TECHNICAL FIELD

The present invention relates to an alumina material including a barium sulfate and a catalyst for exhaust gas purification using the same, and in more detail, the present invention relates to an alumina material including a barium sulfate, a catalyst or an adsorbent using the same, in particular, a catalyst for exhaust gas purification superior in purification performance of nitrogen oxides (NOₓ) in exhaust gas discharged from an internal combustion engine such as a gasoline vehicle, a diesel vehicle.

### BACKGROUND ART

An alumina material including calcium sulfate, barium sulfate, or the like, in addition to the magnesium sulfate, which is a sulfate compound of an alkaline earth element, has been known as a catalyst for decomposing hydrocarbons with high boiling point, such as heavy oil or light oil, to hydrocarbons with lower boiling point; or as an adsorbent for suppressing discharge of a sulfur oxide generating in petroleum purification (refer to PATENT DOCUMENT 1).

On the other hand, in a catalyst apparatus for purifying exhaust gas discharged from an internal combustion engine of a gasoline vehicle or the like, various catalysts have been used in response to object thereof. As a major catalyst component thereof, there is a platinum group metal, and usually it is used by being supported, in high dispersion, onto a refractory inorganic oxide having high surface area of activated alumina or the like (refer to PATENT DOCUMENT 2).

As the platinum group metal as the catalyst component for purifying exhaust gas, platinum (Pt), palladium (Pd), and rhodium (Rh) have been known, which have been used widely as the catalyst for purifying exhaust gas discharged from an internal combustion engine of a gasoline vehicle or the like. Specifically, a catalytically active species superior in oxidation activity such as Pt, Pd, and Rh superior in purification activity of NOₓ are used in combination, in many cases. In recent years, regulations on harmful substances included in exhaust gas, in particular, NOₓ, have become more and more severe. Accordingly, it is necessary to effectively use Rh superior in purification activity of NOₓ. In addition, Rh is scarce in production amount and high priced, which has caused price hike in recent market. Therefore, it is preferable to decrease use amount of Rh as a catalytically active species, in view of resource protection as well as cost.

In addition, in recent years, a platinum group metal has become to be used positively to purify NOₓ discharged in a large quantity from an internal combustion engine of a diesel vehicle or the like. As a purification method for NOₓ, there has generally been known a technology for denitrating by reduction by a reaction represented by formula (1), by making exhaust gas including NOₓ (NO and NO₂) contacted with a selective reduction catalyst composed mainly of titanium oxide, vanadium oxide, zeolite or the like, under the presence of an ammonia (NH₃) component generating in decomposition of urea, as a selective reduction method or a Selective Catalytic Reduction (hereafter it may also be referred to as SCR) method.

NO + NO₂ + 2NH₃ → 2N₂ + 3H₂O (1)

However, to make proceed this Selective Catalytic Reduction {reaction formula (1)} efficiently, it is preferable that NO and NO₂ are included each by about half amount (refer to NON PATENT DOCUMENT 1). However, most of NOₓ components discharged from a lean-burn combustion engine is nitrogen monoxide (NO) (refer to PATENT DOCUMENT 3). Therefore, there has been proposed an arrangement of an NO oxidation means in an exhaust gas passage, to increase concentration of an NO₂ component in exhaust gas, aiming at efficient purification of NOₓ (refer to PATENT DOCUMENT 3). Specifically, Pt having high oxidation capability of NO is used as an oxidation catalyst.

On the other hand, in a gasoline automobile, where air/fuel ratio (hereafter, it may be referred to as A/F) is controlled at the vicinity of theoretical air/fuel ratio, purification of NOₓ by Rh becomes important, and it is considered that, for example, a steam reforming reaction { reaction formula (2)} or a CO + NO reaction { reaction formula (4)} is promoted via the Rh component as shown below and to purify NOₓ { reaction formula (3)} .

And, it has become known a technology that the zirconium oxide promotes the steam reforming reaction or the CO + NO reaction, when used together with the Rh component. (refer to PATENT DOCUMENT 4)

HC+H₂O → COx+H₂ (2)

H₂+ NOₓ → N₂+H₂O (3)

CO+NO → CO₂+1/2N₂ (4)

In addition to the above, in recent years, as a method for decreasing use amount of Rh, it was considered to promote the purification of NOₓ with using H₂ generating by a steam reforming reaction { reaction formula (2)} or a water gas shift reaction { reaction formula (5)}, even in Pt or Pd (refer to PATENT DOCUMENT 5) , and there has been investigated the use of an alkaline earth metal where water-soluble barium acetate is used as a raw material, as a promoter component.

CO + H₂O → CO₂ + H₂ (5)

An alkaline earth metal represented by the Ba component stores temporarily NOₓ included in exhaust gas, as the promoter component, and purifies the stored NOₓ by reducing to N₂ by a reducing component included in exhaust gas (refer to PATENT DOCUMENT 6).

In general, NOₓ is generated in a large quantity, when fuel supplied to an engine is less, and amount of air is more, and combustion temperature is high. The Ba component temporarily absorbs NOₓ generated in this way, as Ba(NO₃)₂.

NOₓ absorbed onto the Ba component is discharged from the Ba component, when NOₓ concentration in exhaust gas becomes low and carbon dioxide (CO₂) concentration becomes high. This is caused by reaction of the above Ba(NO₃)₂ with carbon dioxide gas under coexistence of steam, to be converted to BaCO₃, and can be said to be chemical equilibrium. NOₓ discharged from the Ba component, as described above, is purified by reduction, by a reaction with a reducing component at the Rh component surface.

Such a promoter component can be used in combination of two or more kind and, for example, TWC has been known where the Ba component and cerium oxide are used (refer to PATENT DOCUMENT 7). Whereas, it has been reported that purification performance may be decreased depending on the combination of catalyst materials and, for example, presence of the Rh component and the Ba component in the same composition decreases purification performance of NOₓ (refer to PATENT DOCUMENT 8) . The reason for this decrease in purification performance is considered to be caused by stabilization of an oxidation Rh structure, because of electron donating action from Ba to Rh.

Therefore, it has been proposed to enhance NOₓ purification performance and heat resistance, by separating the Rh component and the Ba component and supporting them onto alumina (refer to PATENT DOCUMENT 9) . In this Document, there is no description on what degree the Rh component and the Ba component are separated in the catalyst layer, however, in the case of using water-soluble Ba acetate as a Ba source, the Ba component elutes into slurry in a slurry production step for coating the catalyst component onto a honeycomb, and thus it cannot be said that the Rh component and the Ba component are sufficiently separated. As a result, the Rh component and the Ba component come close to, and thus NOₓ purification performance cannot be exerted sufficiently.

In this way, there are various combinations of the catalyst components, and complicated reaction routes are taken by mutual interaction of the catalyst components, and thus by overall investigation on these, a combination of the catalyst components, which exerts purification action most, has been searched.

By the way, an exhaust gas purifying catalyst may be arranged as one set in exhaust gas passage, however, there may be the case where two or more sets are arranged. This aims at making more use of characteristics of the exhaust gas purifying catalyst, in response to strengthening of exhaust gas regulations, and setting respective optimum position, in response to durability (heat resistance, atmosphere resistance, poisoning resistance), catalyst characteristics (oxidation activity, reduction activity) or the like which respective noble metal of platinum, palladium and rhodium have.

In addition, to reduce use amount of high price noble metals or rare earth metals leads to efficient utilization of a limited resource, and therefore, it has been required to install the exhaust gas purifying catalyst at the optimum position of exhaust gas passage, in response to characteristics of respective noble metals or rare earth metals.

Further, regulations on exhaust gas have become more and more severe in recent years, and advent of such a catalyst has been desired that exerts more superior exhaust gas purification performance, by using a plurality of catalysts. Regulation value for, in particular, NOₓ among the exhaust gas has become severer, and thus needs of the catalyst for purifying exhaust gas superior in purification performance of NOₓ has increased.

Under such situation, there has been proposed the use of an alumina material including barium sulfate and Pd, as a material of TWC (refer to PATENT DOCUMENT 10).

Pd is superior in purification of HC at low temperature, however, it tends to generate enlarging phenomenon (sintering) of particle size by conjugation of particles themselves by heat, which decreases contact area with HC included in exhaust gas, resulting in decrease in purification performance of HC at low temperature. Ba, by coexistence of Pd, enables to, for example, suppress sintering of Pd, and maintain activity of Pd, due to electronic action of Ba. On the other hand, Rh is superior in purification performance of NOₓ, as a material of TWC, however, Ba acts negatively against the purification reaction of NOₓ by Rh, and may decrease activity of Rh. Accordingly, Pd and Ba are made coexistent on alumina, while, hardly soluble barium sulfate is used to avoid elution of Ba in slurry and contact with Rh.

However, barium sulfate has characteristics of decomposing under reducing atmosphere at 700°C or higher in exhaust gas, and dispersing at random in a catalyst layer. To sufficiently control the arrangement of Ba in the catalyst layer, it is desirable to limit dispersion range of barium sulfate, by supporting hardly soluble barium sulfate onto a porous inorganic oxide carrier, such as, for example, alumina. Whereas, in the case of PATENT DOCUMENT 10, there has been little described about a supported method of barium sulfate onto alumina, and thus it is doubtful whether desired catalytic performance can be obtained.

### CITATION LIST

### PATENT DOCUMENT

PATENT DOCUMENT 1: JP-A-61-54234
PATENT DOCUMENT 2: JP-A-05-237390
PATENT DOCUMENT 3: JP-A-08-103636
PATENT DOCUMENT 4: WO2000/027508A1
PATENT DOCUMENT 5: JP-A-7-251073
PATENT DOCUMENT 6: JP-A-2007-319768
PATENT DOCUMENT 7: JP-A-03-106446
PATENT DOCUMENT 8: JP-A-2002-326033
PATENT DOCUMENT 9: JP-A-09-215922
PATENT DOCUMENT 10: JP-A-2010-274162

### NON PATENT DOCUMENT

NON PATENT DOCUMENT 1: Catalysis Today 114(2006)3-12

### SUMMARY OF INVENTION

### TECHNICAL PROBLEM

In view of the above-described conventional problems, it is an object of the present invention to provide an alumina material including a barium sulfate, a catalyst or an adsorbent using the same, in particular, a catalyst for exhaust gas purification superior in NOₓ purification performance, suitable as a catalyst for purifying harmful substances included in exhaust gas discharged from an internal combustion engine such as a gasoline vehicle, a diesel vehicle.

### SOLUTION TO PROBLEM

The present inventors have intensively studied a way to solve the above-described conventional problems and found that purification (or oxidation) of nitrogen oxides (NOₓ) is promoted by using the alumina material including a barium sulfate, in a specific amount, as the exhaust gas purification catalyst purifying particularly NOₓ, among hydrocarbons (HC), carbon monoxide(CO), and nitrogen oxides (NOₓ) in exhaust gas discharged from an internal combustion engine such as a gasoline vehicle, a diesel vehicle, and by setting average particle size of barium sulfate dispersing in the alumina material, and average particle size of alumina at specific value or smaller, and by setting BET specific surface area of the alumina material at specific range, and have thus completed the present invention.

That is, according to a first aspect, there is provided an alumina material containing a barium sulfate in an amount of 5 to 70% by mass to alumina, wherein average particle size of barium sulfate dispersing in the alumina material is 4 µm or smaller, average particle size of alumina is 50 µm or smaller, and BET specific surface area of the alumina material is 20 to 250 m²/g.

In addition, according to a second aspect of the present invention, in the first aspect, there is provided the alumina material including a barium sulfate, wherein kind of alumina is any of γ-alumina, δ-alumina, θ-alumina, or boehmite.

In addition, according to a third aspect of the present invention, in the first aspect, there is provided a catalyst for exhaust gas purification using the alumina material including a barium sulfate.

In addition, according to a fourth aspect of the present invention, in the third aspect, there is provided the catalyst for exhaust gas purification, wherein the alumina material including a barium sulfate is coated onto an integrated structure-type carrier, as a catalyst layer.

In addition, according to a fifth aspect of the present invention, in the third or the fourth aspect, there is provided the catalyst for exhaust gas purification, wherein the catalyst layer further contains a noble metal, and the alumina material including a barium sulfate is present in the same layer as said noble metal.

In addition, according to a sixth aspect of the present invention, in the fifth aspect, there is provided the catalyst for exhaust gas purification, wherein kind of the noble metal is one or more kind selected from rhodium, palladium and platinum.

In addition, according to a seventh aspect of the present invention, in the sixth aspect, there is provided the catalyst for exhaust gas purification, wherein rhodium is supported on a porous inorganic oxide different from the alumina material including a barium sulfate.

Further, according to an eighth aspect of the present invention, in the sixth aspect, there is provided the catalyst for exhaust gas purification, wherein palladium and/or platinum is supported on the alumina material including a barium sulfate.

### ADVANTAGEOUS EFFECTS OF INVENTION

Because the alumina material of the present invention uses the alumina material including a barium sulfate, in a specific amount, average particle size of barium sulfate dispersing in the alumina material and average particle size of alumina are set at specific value or smaller, and BET specific surface area of the alumina material is at specific range, when it is used as a material of the catalyst for exhaust gas purification, it is superior in removal activity of nitrogen oxides, and exerts high purification performance for nitrogen oxides discharged from various kinds of combustion apparatuses.

Further, the catalyst for purifying exhaust gas of the present invention can be produced in low cost because of less use amount of high price activated metals, and thus an apparatus for purifying exhaust gas can be produced and supplied stably.

### DESCRIPTION OF EMBODIMENTS

Explanation will be given below in detail on the alumina material including a barium sulfate of the present invention, and the catalyst for exhaust gas purification using the same. It should be noted that description will be made mainly on an embodiment in a gasoline engine, however, the present invention is not limited to automotive applications, and it is applicable widely also to denitration technology of nitrogen oxides in exhaust gas of adsorbent or the like.

### 1. The alumina material including a barium sulfate

In the alumina material including a barium sulfate of the present invention, barium sulfate (BaSO₄) is in the content of 5 to 70% by mass, and is dispersed in the alumina material.

### (1) Barium sulfate

Barium sulfate (BaSO₄, hereafter it may also be referred to as a Ba component) is extremely hardly soluble in water. In addition, barium sulfate is a material with extremely superior heat resistance, having a melting point of 1600°C, and a material little aggregate by heating. In addition, barium sulfate is only the one excluded from deleterious substances, while other barium salts are specified as deleterious substances, and has thus no problem in view of safety.

In contrast to this, barium carbonate among barium salts is also hardly soluble in water, however, is more easy to dissolve as compared with barium sulfate, and because of having a melting point of 811°C and the heat resistance about half as compared with barium sulfate, it could aggregate by heating, and use thereof as the catalyst for exhaust gas purification is not preferable.

Because barium sulfate is extremely hardly soluble in water, and, as will be described later, in making slurry with a Rh-supported base material, it is little eluted into water as a Ba component, it can significantly suppress poisoning action to Rh, and thus does not suppress reduction action of NOₓ by a reducing agent such as hydrogen carbon, CO, at the Rh component surface.

The Role of Ba component in the present invention is temporal adsorption of NOₓ, for example, in the catalyst for exhaust gas purification, although it depends on use fields or applications. In the case where the catalyst is exposed to exhaust gas over 700°C, barium sulfate decomposes under reducing atmosphere to form barium carbonate or the like having NOₓ adsorption capability by reacting with CO₂ in exhaust gas, while air/fuel ratio is controlled at the vicinity of A/F=14.7 (theoretical air/fuel ratio).

Because barium sulfate has singly a small BET specific surface area of 10 m²/g or smaller, in order to increase adsorption amount of NOₓ, surface area is increased by increasing barium sulfate itself, or by supporting barium sulfate onto a base material having high surface area and high heat resistance.

In addition, average particle size of barium sulfate to be dispersed in alumina is set at 4 µm or smaller. The average particle size is preferably 2 µm or smaller, more preferably 1 µm or smaller, and particularly preferably 500 nm or smaller. The average particle size of barium sulfate over 4 µm cannot increase surface area effectively, even by supporting barium sulfate on a base material having high surface area, and thus it is not preferable.

### (2) Alumina

In the present invention, alumina is one kind of the porous inorganic oxide, and is used to support a noble metal, Rh or Rh and Pt, other than Ba. Kind of alumina is any of γ-alumina, δ-alumina, θ-alumina, or boehmite.

Among them, alumina having high BET specific surface area is preferable. On the other hand, α-alumina, because of having a small low BET specific surface area of 10 m³/g or smaller, is not preferable as a material for supporting barium sulfate having small BET specific surface area. However, BET specific surface are over 250 m²/g gives too small pore diameter inside the particle, which decreases diffusion of gas inside the pore, and thus it is not preferable.

In view of the above, BET specific surface area of alumina should be 20 to 250 m²/g, and is preferably 80 to 250 m²/g, more preferably 100 to 200 m²/g.

In the present invention, pore diameter (mode diameter, the same hereafter) of alumina is preferably 3 to 150 nm, more preferably 5 to 150 nm, and still more preferably 5 to 100 nm. The pore diameter of alumina smaller than 3 nm not only slows diffusion of gas inside the pore, but also could clog the pore by a coating substance or the like. On the other hand, the pore diameter larger than 150 nm decreases relatively BET specific surface area, and deteriorates dispersion of a noble metal or a promoter or the like, and thus it is not preferable.

In addition, average particle size of alumina is 50 nm to 50 µm, preferably 50 nm to 45 µm, and more preferably 50 nm to 40 µm. The average particle size of alumina over 50 µm not only slows gas diffusion to the center part of the particle, which not only inhibits effective utilization of the center part of the alumina particle, but also decreases supportable amount of barium sulfate, and thus it is not preferable. On the other hand, the average particle size smaller than 50 nm provides too small space among particles, which slows diffusion of gas among the spaces, and thus it is not preferable.

To enhance durability of alumina, further, an alkaline earth element such as barium, magnesium, and a rare earth element such as cerium, lanthanum, neodymium, praseodymium may be given. However, the addition amount of the rare earth or the like is preferably 30% by weight or less, to avoid significant decrease in high BET specific surface area of alumina.

### (3) Supporting methods

Supporting methods of barium sulfate onto alumina include, for example, the following methods.

### (Process 1)

As a starting salt of barium sulfate, a water-soluble salt such as barium acetate, barium chloride, barium nitrate, barium hydroxide is prepared. Use of barium acetate or barium chloride, which has superior water-solubility, is preferable. After making an aqueous solution including barium, which was prepared by dissolving these barium salts into water, immersed into alumina, it is calcined. After that, sulfuric acid or ammonium sulfate is added, so as to attain a SO₄/Ba ratio of 1 to 2, and it is calcined again.

### (Process 2)

Slurry dispersed with barium sulfate and alumina is prepared by adding alumina and barium sulfate singly, or both with water into a pulverizer such as a beads mill, and performing pulverization and dispersion processing till an average particle size of 10 nm to 2.0 µm is attained. This mixed slurry is granulated to attain an average particle size of 1 to 60 µm, more preferably from 5 to 50 µm, by a spray dryer, a fluidized bed granulating dryer or the like, and calcined.

It should be noted that by pulverization and dispersion processing of alumina or barium sulfate each singly, it is possible to freely control each average particle size of alumina and barium sulfate.

On this occasion, use of barium sulfate with a small primary crystal diameter of 10 to 500 nm, or boehmite, which is a precursor of γ-alumina, makes dispersion easier.

### (Process 3)

A barium sulfate dispersion solution is prepared by mixing barium sulfate with a small primary crystal diameter of 10 to 500 nm and water, adding an ionic surfactant, dispersing using a mixer. This dispersion solution is immersed and supported onto alumina powder and calcined.

In the alumina material including a barium sulfate obtained by the above process, barium sulfate is uniformly contained at the surface and inside of the alumina, irrespective of content of barium sulfate. However, in the case of using the above process 2, because after making fine particle of alumina and barium sulfate using a pulverizer of a beads mill or the like, they are granulated again by a spray dryer, a fluidized bed granulating dryer or the like, among property of the particle after re-granulation, in particular, pore diameter, pore volume or the like, may differ from those of alumina and barium sulfate before preparation.

In the barium sulfate-supported alumina prepared by the above supporting methods, property such as BET specific surface area, pore diameter and pore volume is influenced by a starting material containing barium before preparation, use amount and property of alumina.

That is, by setting mixing ratio of barium sulfate into alumina at 5 to 70% by weight, and by using the supporting methods of the processes 1 to 3, dispersion of barium sulfate becomes good, and the BET specific surface area easy to diffuse gas is obtained. In the present invention, the BET specific surface area is 20 to 250 m²/g, and preferably 30 to 200 m²/g, and more preferably 40 to 200 m²/g.

In addition, similarly, the pore diameter becomes 3 to 150 nm, which provides good dispersion of barium sulfate and easy diffusion of gas, and it is preferably 5 to 150 nm, and more preferably 5 to 100 nm. Further, the pore volume becomes 0.4 to 2. 5 cc/g, which similarly provides good dispersion of barium sulfate and easy diffusion of gas, and preferably 0.5 to 2.5 cc/g, and more preferably 0.5 to 2.0 cc/g.

Supported amount of barium sulfate onto alumina is set at 5% by weight to 70% by weight, and more preferable supported amount is 10% by weight to 60% by weight, and particularly preferable supported amount is 12% by weight to 50% by weight. The supported amount of barium sulfate below 5% by weight does not influence denitration performance, however, in trying to add the same weight of barium sulfate to a base material, it increases content of alumina itself, which not only increases weight of the catalyst but also narrows a cell of the honeycomb structure. Because of this, it not only deteriorates temperature rising characteristics of the catalyst but also increases pressure loss, and thus it is not preferable. On the other hand, the supported amount of barium sulfate over 70% by weight decreases effect for supporting it onto alumina having high BET specific surface area, resulting in providing effect of single barium sulfate only, and thus it is not preferable.

### 2. Catalyst for exhaust gas purification

In the catalyst for exhaust gas purification (hereafter it may be referred to as a catalyst composition) of the present invention, the alumina material including a barium sulfate is coated onto the integrated structure-type carrier as a catalyst layer. In addition, it is preferable that the catalyst layer further contains a noble metal, and the alumina material including a barium sulfate is present at the same layer as a noble metal. However, supporting position may differ depending on the kind of the noble metal.

For example, in the case where the noble metal is rhodium (Rh), rhodium is supported onto a porous inorganic oxide different from the alumina material including a barium sulfate. In this way, at least a part of Rh becomes present independently from Ba, within the catalyst layer.

On the other hand, in the case where the noble metal is palladium (Pd) and/or platinum (Pt), palladium and/or platinum are supported onto the alumina material including a barium sulfate. In this way, a part of Pd and/or Pt becomes coexistent with Ba, within the catalyst layer.

### (1) Porous inorganic oxide

In the present invention, the porous inorganic oxide is not especially limited by kind thereof, and includes a zirconium oxide-type composite oxide, alumina, an alumina-type composite oxide, or ceria or the like. In particular, it is preferable that the porous inorganic oxide is composed of one or more kind selected from alumina or a zirconium oxide-type composite oxide.

Among these, the zirconium oxide-type composite oxide is preferably a composite oxide between zirconium and a rare earth element, or the like. It is because of low heat resistance of zirconium oxide of a single component of zirconium. As the rare earth, one or more kind selected from Ce, La, Nd, Pr or Y is preferable. In addition, ratio of the rare earth element occupying in the zirconium oxide-type composite oxide is 5% by weight to 50% by weight, and preferably, 10% by weight to 40% by weight, based on the oxide.

The ratio of the rare earth oxide below 5% by weight decreases heat resistance of the zirconium oxide-type composite oxide, while the ratio over 50% by weight may decrease steam reforming function, which zirconium oxide has.

The zirconium oxide-type composite oxide can be produced, for example, by calcining one or more kind of an inorganic or organic zirconium compound in air at 450 to 600°C, and using a crushed one of the resulting oxide particles, as raw material powder, and mixing thereto raw material powder of the rare earth oxide.

### (2) Rhodium (Rh)

In the present invention, as an active metal, rhodium of a noble metal element, which is superior in purification activity of NOₓ, can be used.

Rhodium is supported on the above porous inorganic oxide, and is not supported on the alumina material including a barium sulfate. As a starting salt to be used in this case, rhodium nitrate, rhodium chloride, rhodium acetate, rhodium sulfate, or the like are preferable. In particular, use of rhodium nitrate or rhodium acetate is preferable, which does not leave residue of chlorine or a sulfide or the like after calcining.

Supported amount of rhodium onto the porous inorganic oxide is preferably 0.05 g/L to 2.0 g/L, and more preferably 0.1 g/L to 1.5 g/L. The amount of rhodium less than 0.05 g/L decreases abruptly denitration performance, while the amount more than 2.0 g/L has no problem on denitration performance, however, is not preferable in view of cost.

### (3) Palladium (Pd)

In the present invention, as an active metal, palladium of a noble metal element can be used.

Palladium is supported onto the above alumina material including a barium sulfate, and as a starting salt to be used in this case, palladium nitrate, palladium chloride, diamminedinitropalladium or the like is preferable. In particular, use of palladium nitrate or diamminedinitropalladium is preferable, which does not leave residue of chlorine or a sulfide or the like after calcining.

Supported amount of palladium is preferably 0.01 g/L to 10.0 g/L, and more preferably 0.1 g/L to 7.0 g/L. The amount of palladium less than 0.05 g/L decreases abruptly denitration performance, while the amount more than 10.0 g/L has no problem on denitration performance, however, is not preferable in view of cost.

### (4) Platinum (Pt)

In the present invention, as an active metal, platinum of a noble metal element can be used.

Platinum is supported onto the above alumina material including a barium sulfate, and as a starting salt to be used in this case, hexachloroplatinic(IV) acid, diamminedinitroplatinum(II) nitrate, an ethanolamine solution of hexahydroxoplatinic acid, tetrachloroplatinic(II) acid, platinum nitrate or the like is preferable. In particular, use of diamminedinitroplatinum(II) nitrate, an ethanolamine solution of hexahydroxoplatinic acid, or platinum nitrate or the like is preferable, which does not leave residue of chlorine or a sulfide or the like after calcining.

Supported amount of platinum is preferably 0.05 g/L to 5.0 g/L, and more preferably 0.1 g/L to 3.0 g/L. The amount of platinum less than 0.05 g/L decreases abruptly denitration performance, while the amount more than 5.0 g/L has no problem on denitration performance, however, is not preferable in view of cost.

In the present invention, use of the alumina material including a barium sulfate enables to attain such a configuration (deviation arrangement) that at least a part of Rh is present independently from Ba, within the catalyst layer. Because barium sulfate decomposes at high temperature of 700°C or higher and under reducing atmosphere, and disperses at random, as barium oxide, in a peripheral composing material, too many amount of barium sulfate has conventionally caused decrease in NOₓ denitration performance, due to presence of dispersed Ba at the vicinity of Rh. However, in the present invention, dispersion place of barium sulfate in decomposition is limited by making fine barium sulfate supported onto alumina. In this way, use of the alumina material including a barium sulfate of the present invention attains the isolated arrangement of the Rh component, even when the Ba component is present in such a large quantity of, for example, about 20 g/L, by which further enhancement of NOₓ denitration performance is expected.

### (5) A binder

In the present invention, a binder component may be added, as needed.

As the binder component, various kinds of sol such as alumina sol, silica sol, zirconia sol, titania sol, can be used. In addition, a soluble salt such as aluminum nitrate, aluminum acetate, zirconium nitrate, zirconium acetate, can also be used. Other than these, as a solvent (a pH modifier), an acid such as acetic acid, nitric acid, hydrochloric acid, sulfuric acid, also be used.

### 3. Integral structure-type carrier

The catalyst for purifying exhaust gas of the present invention can be used as a structure-type catalyst, where the above catalyst component is coated onto various types of carriers, in particular, at the surface of the integral structure-type carrier. In this case, shape of the carrier is not especially limited, and it is selectable from the structure-type carrier of such as prism-like, cylinder-like, sphere-like, honeycomb-like, sheet-like one. Size of the structure-type carrier is not especially limited, and those having a diameter (length) of, for example, several millimeters to several centimeters can be used, as long as it is any one of the prism-like, cylinder-like, or sphere-like one. Among them, use of the honeycomb-like honeycomb structure carrier is preferable.

### (Honeycomb structure carrier)

The honeycomb structure carrier means such one as composed of ceramics such as cordierite, silicon carbide, silicon nitride, or a metal of stainless steel or the like, and the structure thereof has many parallel fine gas passages extending over the whole structure carrier. As a material, cordierite is preferable in view of durability and cost.

In addition, as for such a honeycomb structure carrier, further, suitable number of holes at the opening part is also determined, in consideration of kind of exhaust gas to be processed, gas flow rate, pressure loss or removing efficiency or the like, however, cell density thereof is preferably from 100 to 900 cells/inch² (15.5 to 139.5 cells/cm²), and more preferably from 200 to 600 cells/inch² (31 to 93 cells/cm²) . The cell density over 900 cells/inch² (139.5 cells/cm²) tends to generate clogging by adhered particulate matter (PM), while the cell density below 100 cells/inch² (15.5 cells/cm²) makes geometrical surface area small, causing decrease in effective utilization rate of the catalyst. It should be noted that the cell density means cell number per unit area in cross-section, when the honeycomb structure carrier is cut perpendicular to a gas passage.

In addition, as the honeycomb structure carrier, there has been known a flow-through-type structure, where a gas passage is communicated, and a wall-flow-type structure, where a part of end face of the gas passage is closed, and gas is able to flow through the wall face of the gas passage. The flow-through-type structure provides less air resistance and smaller pressure loss of exhaust gas. In addition, the wall-flow-type structure is capable of filtering off particle-like components included in exhaust gas. The catalyst for purifying exhaust gas of the present invention can be used in either of the structures.

### (Layer configuration)

The catalyst for purifying exhaust gas of the present invention is the one where the above catalyst composition is coated onto the honeycomb structure carrier in one or more layers. Layer configuration may be one layer, however, to provide two or more layers is preferable to enhance exhaust gas purification performance.

### (Catalyst preparation method)

To prepare the catalyst for purifying exhaust gas of the present invention, the above catalyst composition and a binder or the like, as needed, are mixed with an aqueous medium to make a slurry-like mixture, and then it is coated onto the integral structure-type carrier, and dried and calcined.

That is, firstly, the catalyst composition and the aqueous medium are mixed in a predetermined ratio to obtain the slurry-like mixture. In the present invention, the aqueous medium may be used in such an amount that is capable of dispersing the catalyst composition uniformly in the slurry.

On this occasion, blending of an acid or alkali for pH adjustment, or blending of a surfactant, a resin for dispersion or the like for viscosity adjustment or for enhancement of slurry dispersion, as needed, is allowed. As a mixing method for slurry, pulverization mixing by a ball mill or the like is applicable, however, other pulverization or mixing methods may be applied.

Next, a slurry-like mixture is coated onto the integral structure-type carrier. The coating method is not especially limited, however, a wash coat method is preferable.

By performing drying and calcining after the coating, the catalyst for purifying exhaust gas, where the catalyst composition is supported, is obtained. It should be noted that drying temperature is preferably from 70 to 150°C, and more preferably 80 to 120°C. In addition, calcining temperature is preferably from 300 to 7000°C, and more preferably 400 to 600°C. Heating may be performed by known heating means such as an electric furnace or a gas furnace or the like.

### 4. Catalyst apparatus using the catalyst for purifying exhaust gas

In the present invention, the catalyst apparatus is configured by arranging the above catalyst for purifying exhaust gas in an exhaustion system from an engine.

Position and number of the catalyst in the exhaust system from an engine may be designed, as appropriate, in response to degree of exhaust gas regulations. In a vehicle type whose exhaust gas regulation is not severe, use by one catalyst apparatus is possible, while in a vehicle type whose exhaust gas regulation is severe, two catalysts are used and at the close coupled catalyst is arranged at the upstream in the exhaustion system, and the catalyst of the present invention, which is capable of exerting superior effect in denitration performance, can be arranged at the underfloor position at the later thereof.

On this occasion, layer configuration of the catalysts of the present invention can be determined in response to discharge concentration of NOₓ and an operation system, and the single layer catalyst or the multilayer catalyst, both composed of the alumina material including a barium sulfate and single or a plurality of noble metal, can be properly used, as appropriate.

### Examples

Examples and Comparative Examples of the present invention will be shown below, however, the present invention should not be construed as limited to these Examples. It should be noted that property of the catalyst samples prepared was measured by the following procedure.

### <XRD measurement>

On powder samples of Examples and Comparative Examples, diffraction patterns were measured using an X-ray diffraction measurement apparatus, X'Pert PRO MPD, manufactured by PANalytical Co., Ltd., and components were identified by comparison with ICSD card data, whose results are summarized in Table 2.

### <Measurement of particle size distribution>

Particle size distribution of the powder sample was measured by a laser scattering method, using a measurement apparatus of nano-particle size distribution, SALD-7100, manufactured by SHIMADZU Corp., whose results are summarized in Table 2, using median diameter as average particle size.

### <Measurement of pore distribution

After drying 0. 3 g of various kinds of dried powder samples, pore distribution and pore amount of the catalyst samples were measured by a mercury intrusion method, using PASCAL140-440, manufactured by Thermo Co., Ltd. It should be noted that mode diameter was adopted as pore diameter, whose results are summarized in Table 2.

### < Ba elution test>

20 g of each material of Examples and Comparative Examples was dispersed into 150 g of water to prepare slurry, and 3.0 g of 1.0 N aqueous solution of nitric acid was added thereto and pH thereof was adjusted to about 4.0. This acidic slurry was put into a semipermeable membrane film, and the entrance was closed, which was put, as it is, in 200 g of the aqueous solution of nitric acid with pH adjusted at 4.0, which was stood still over night. After that, a solution outside the semipermeable membrane film was sampled in an amount of about 50 g, and Ba concentration in the solution was determined by ICP analysis to calculate Ba elution rate, which results are summarized in Table 3.

### (Example 1)

43.8 g of barium sulfate was dissolved into 100 mL of pure water to prepare an aqueous solution of barium sulfate, which was impregnated and supported onto 60 g of γ-alumina having a BET specific surface area of 150 m²/g, a pore diameter of 15 nm, and an average particle size of 35 µm. This water-containing substance was calcined in air at 700°C for 1 hour. Further, 9.2 mL of commercially available 36 N concentrated sulfuric acid was diluted with 100 mL of pure water, which was added to this barium-containing powder (S/Ba ratio=1.0), and which was calcined at 500°C for 1 hour to obtain 100 g of alumina which supports 40% by weight barium sulfate of Example 1. Properties are shown in Table 2 and Table 3.

After that, an Rh catalyst layer or a catalyst for exhaust gas purification which includes Pd-supported BaSO₄/Al₂O₃, was prepared by a procedure as described below, which was subsequently evaluated by performing a catalyst performance test.

### <Rh-supported Al₂O₃>

A rhodium nitrate solution was weighed in an amount of 0.2 g as Rh weight, diluted with pure water, and impregnated and supported onto 39.8 g of γ-alumina powder having a BET specific surface area of 150 m²/g, and an average pore diameter of 15 nm. By calcining this water-containing powder in air at 500°C for 1 hour, 0.5% by weight of alumina-supported Rh was prepared.

### <Rh-supported ZrO₂-type composite oxide>

A rhodium nitrate solution was weighed in an amount of 0.05 g as Rh weight, diluted with pure water, and impregnated and supported onto 50 g of composite oxide powder made of 5.0% by weight of cerium oxide-5.0% by weight of lanthanum oxides-10.0% by weight of neodymium oxide-80. 0% by weight of zirconium oxide, having a BET specific surface area of 70 m²/g, and a pore diameter of 15 nm. By calcining this water-containing powder in air at 500°C for 1 hour, 0.1% by weight of Rh-supported zirconia-type composite oxide, was prepared.

### <Preparation of Rh catalyst layer>

12.5 g of the material of Example 1 (40% by weight of barium sulfate-supported alumina), 40 g of the above 0.5% by weight of Rh-supported alumina, 50 g of the above 0.1% by weight of Rh-supported zirconia-type composite oxide, 22.5 g of γ-alumina, and 120 mL of water were mixed and pulverized in a pot mill to prepare slurry. By coating this slurry onto a honeycomb carrier made of cordierite, having a volume of 250 mL { 600 cells/inch² (93 cells/cm²)}, drying at 80°C for 20 minutes, and then calcining at 450°C for 1 hour, the Rh-type catalyst (catalyst weight: 125 g/L, Rh: 0.25 g/L, barium sulfate: 5.0 g/L) was obtained.

### [Pd-supported BaSO₄/Al₂O₃]

A palladium nitrate solution was weighed in an amount of 1.0 g as Pd weight, diluted with pure water, and impregnated and supported onto 99 g of the above barium sulfate-supported alumina. By calcining this water-containing powder in air at 500°C for 1 hour, 1.0% by weight of Pd-supported BaSO₄/Al₂O₃, was prepared.

### <Catalyst performance test>

### [Evaluation (1)]

The obtained Rh-type catalyst was subjected to heat treatment at 900°C for 3 hours, under air flow of 10% H₂/N₂, in a tube-like quartz furnace. Further, it was subjected to heat treatment at 900°C for 3 hours in air, in an electric furnace. The honeycomb catalyst after the heat treatment was cut out to a size of 7 cells × 7 cells × 7 mm, and put into a sample holder to perform the catalyst performance test using a TPD reactor (temperature programmed desorption gas analysis apparatus). NOₓ purification performance of the Rh-type catalyst was investigated under model gas condition set at evaluation condition (1) in Table 1. Result thereof is summarized in evaluation (1) in Table 4.

### [Evaluation (2)]

10g of 1.0% by weight of Pd-supported BaSO₄/Al₂O₃ was subjected to heat treatment at 1000°C for 12 hours, in air, in an electric furnace. 30 mg of the sample was taken after the heat treatment, and put into a sample holder to perform the catalyst performance test using a commercially available TPD reactor (temperature programmed desorption gas analysis apparatus). NOₓ purification performance of the Pd-type catalyst was investigated under model gas condition set at evaluation condition (2) in Table 1. Result thereof is summarized in evaluation (2) in Table 5.

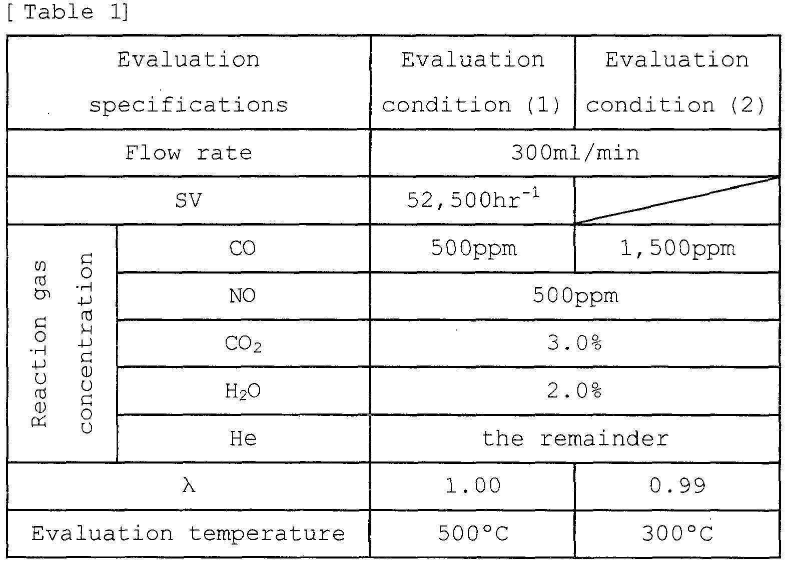

### (Example 2)

100 g of 40% by weight of barium sulfate-supported alumina of Example 2 was obtained similarly, except by using 22.6 g of ammonium sulfate instead of concentrated sulfuric acid, in the preparation method of barium sulfate-supported alumina of Example 1. Properties are shown in Table 2 and Table 3.

After that, a catalyst for exhaust gas purification, which includes the Rh catalyst layer, was prepared by similar procedure as described above, which was subsequently evaluated by performing a catalyst performance test. Result thereof is summarized in evaluation (1) in Table 4.

### (Example 3)

Different from the preparation method for barium sulfate-supported alumina of Example 1, 95 g of γ-alumina powder and 200 mL of water were mixed, and crushing processing was performed in a milling equipment to prepare slurry dispersed with alumina having an average particle size of 0.2 µm. 5 g of barium sulfate having a BET specific surface area of 5 m²/g, and an average particle size of 1. 0 µm was added thereto and subjected to dispersion mixing for 1 hour using a high shear mixer. This mixture slurry was granulated using a spray dryer, so as to attain an average particle size of up to 15.0 µm, and which was still more calcined at 500°C for 1 hour to obtain 100 g of 5% by weight of barium sulfate-supported alumina of Example 3. Properties are shown in Table 2.

After that, a catalyst for exhaust gas purification, which includes an Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Example 4)

100 g of 10% by weight of barium sulfate-supported alumina of Example 4 was obtained by performing a similar preparation method, except by changing weight of γ-alumina powder to 90 g and weight of barium sulfate to 10 g, in Example 3. Properties are shown in Table 2.

After that, a catalyst for exhaust gas purification, which includes the Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Example 5)

100 g of 20% by weight of barium sulfate-supported alumina of Example 5 was obtained by performing a similar preparation method, except by changing weight of γ-alumina powder to 80 g and weight of barium sulfate to 20 g, in Example 3. Properties are shown in Table 2.

After that, a catalyst for exhaust gas purification, which includes the Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Example 6)

100 g of 40% by weight of barium sulfate-supported alumina of Example 6 was obtained by performing a similar preparation method, except by changing weight of γ-alumina powder to 60 g and weight of barium sulfate to 40 g, in Example 3. Properties are shown in Table 2 and Table 3.

After that, a catalyst for exhaust gas purification, which includes the Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Example 7)

100 g of 70% by weight of barium sulfate-supported alumina of Example 7 was obtained by performing a similar preparation method, except by changing weight of γ-alumina powder to 30 g and weight of barium sulfate to 70 g, in Example 3. Properties are shown in Table 2 and Table 3.

After that, a catalyst for exhaust gas purification, which includes the Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Example 8)

100 g of 40% by weight of barium sulfate-supported alumina of Example 8 was obtained by performing a similar preparation method, except by changing average particle size of barium sulfate to 0.2 µm, in Example 3. Properties are shown in Table 2 and Table 3.

After that, a catalyst for exhaust gas purification, which includes the Rh catalyst layer, was prepared similarly as described above, which was subsequently evaluated by performing a catalyst performance test. Result thereof is summarized in evaluation (1) in Table 4.

### (Example 9)

100 g of 40% by weight of barium sulfate-supported alumina of Example 9 was obtained by performing a similar preparation method, except by changing average particle size of γ-alumina after milling to 1.2 µm, in Example 3. Properties are shown in Table 2 and Table 3.

After that, a catalyst for exhaust gas purification, which includes the Rh catalyst layer, was prepared similarly as described above, which was subsequently evaluated by performing a catalyst performance test. Result thereof is summarized in evaluation (1) in Table 4.

### (Example 10)

100 g of 40% by weight of barium sulfate-supported alumina of Example 10 was obtained by performing a similar preparation method, except by using γ-alumina, having a BET specific surface area of 200 m²/g, a pore diameter of 10 nm, and an average particle size of 35 µm, as an alumina material, in Example 9. Properties are shown in Table 2.

After that, a catalyst for exhaust gas purification, which includes the Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Example 11)

100 g of 10% by weight of barium sulfate-supported alumina of Example 11 was obtained by performing a similar preparation method, except by changing weight of γ-alumina powder to 90 g and weight of barium sulfate to 10 g, in Example 10. Properties are shown in Table 2 and Table 3.

After that, a catalyst for exhaust gas purification, which includes the Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Example 12)

100 g of 40% by weight of barium sulfate-supported alumina of Example 12 was obtained by performing a similar preparation method, except by using θ-alumina, having a BET specific surface area of 100 m²/g, a pore diameter of 25 nm, and an average particle size of 35 µm, as an alumina material, in Example 10. Properties are shown in Table 2 and Table 3.

After that, a catalyst for exhaust gas purification, which includes the Rh catalyst layer, was prepared similarly as described above, which was subsequently evaluated by performing a catalyst performance test. Result thereof is summarized in evaluation (1) in Table 4.

### (Example 13)

100 g of 40% by weight of barium sulfate-supported alumina of Example 13 was obtained by performing a similar preparation method, except by changing average particle size of barium sulfate to 2.0 µm, in Example 9. Properties are shown in Table 2 and Table 3.

After that, a catalyst for exhaust gas purification, which includes the Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Example 14)

100 g of 40% by weight of barium sulfate-supported alumina of Example 14 was obtained by performing a similar preparation method, except by changing average particle size of barium sulfate to 0.3 µm, in Example 9. Properties are shown in Table 2 and Table 3.

After that, a catalyst for exhaust gas purification, which includes the Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Example 15)

100 g of 40% by weight of barium sulfate-supported alumina of Example 15 was obtained by performing a similar preparation method, except by using boehmite, having a BET specific surface area of 80 m²/g, a pore diameter of 20 nm, and an average particle size of 0.35 µm, as an alumina material, and by changing calcining temperature after granulation to 700°C, in Example 3. Properties are shown in Table 2.

After that, a Ph-type catalyst, which contains the Rh catalyst layer, was prepared similarly as described above, which was subsequently evaluated by performing a catalyst performance test. Result thereof is summarized in evaluation (1) in Table 4.

### (Example 16)

100 g of 40% by weight of barium sulfate-supported alumina of Example 16 was obtained by performing a similar preparation method, except by changing average particle size of boehmite after milling to 0.1 µm, in Example 15. Properties are shown in Table 2 and Table 3.

After that, a catalyst for exhaust gas purification, which includes the Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Example 17)

Different from the preparation method for barium sulfate-supported alumina of Example 1, 40 g of barium sulfate having an average particle size of 0. 5 µm was added and dispersed into 200 mL of pure water. An aqueous solution of 10% aluminum sulfate (15 g in alumina weight equivalent) and an aqueous solution of 10% sodium aluminate (45 g in alumina weight equivalent) were dropped alternately into the dispersed solution, which was subjected to hydrolysis to precipitate boehmite (aluminum hydroxide) . After separation washing of the mixed precipitate using a centrifugal separation machine, it was dried at 80°C for 12 hours, and which was calcined at 500°C for 1 hour to obtain 100 g of 40% by weight of barium sulfate-supported alumina Example 17. Properties are shown in Table 2 and Table 3.

After that, a catalyst for exhaust gas purification, which includes the Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Example 18)

Different from the preparation method for barium sulfate-supported alumina of Example 1, 40 g of barium sulfate having an average particle size of 0.3 µm and 3g of a polycarboxylic acid-type anionic surfactant having a molecular weight of 20000 to 30000 were added to 100 mL of pure water, both of which were mixed well using a homogenizer to prepare a dispersed solution of barium sulfate. This dispersion solution was impregnated and supported onto 60 g of γ-alumina, having a BET specific surface area of 150 m²/g, a pore diameter of 15 nm, and an average particle size of 35 µm, and which was calcined at 500°C for 1 hour to obtain 100 g of alumina which supports 40% by weight barium sulfate of Example 18. Properties are shown in Table 2 and Table 3.

After that, a catalyst for exhaust gas purification, which includes an Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Comparative Example 1)

In Example 1, the barium sulfate-supported alumina was prepared, however, barium carbonate-supported alumina was prepared instead of barium sulfate as follows.

43.8 g of barium acetate crystal was dissolved into 100 mL of water to prepare an aqueous solution of barium acetate, which was impregnated and supported onto 60 g of γ-alumina powder having a BET specific surface area of 150 m²/g, a pore diameter of 15 nm, and an average particle size of 35 µm. This water-containing powder was calcined in air at 500 °C for 1 hour, to obtain 93.85 g of 36% by weight of barium carbonate (in XRD measurement, only barium carbonate was observed)-supported alumina of Comparative Example 1 (40% by weight in barium sulfate equivalent). Properties are shown in Table 2 and Table 3, however, numerical values in the columns of average particle size of barium sulfate and amount of barium sulfate are both for barium carbonate.

After that, the Rh-type catalyst including the Rh catalyst layer was prepared similarly as described above, which was subsequently evaluated by performing a catalyst performance test. Result thereof is summarized in evaluation (1) in Table 4.

### (Comparative Example 2)

100 g of 40% by weight of barium sulfate-supported alumina of Comparative Example 2 was obtained by performing a similar preparation method as in Example 3, except by using α-alumina powder, having a BET specific surface area of 1 m²/g, and an average particle size of 5.0 µm, as a γ-alumina material. Properties are shown in Table 2. In Table 2, reason for description of none (pore diameter) is because of no confirmation of a primary pore inside the particle of the relevant powder by a pore distribution measurement apparatus.

After that, a catalyst for exhaust gas purification, which includes an Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Comparative Example 3)

100 g of 90% by weight of barium sulfate-supported alumina of Comparative Example 3 was obtained by performing a similar preparation method as in Example 3, except by changing weight of γ-alumina powder to 10 g and weight of barium sulfate to 90 g. Properties are shown in Table 2. In Table 2, reason for description of none (pore diameter) is because of no confirmation of a primary pore inside the particle of the relevant powder by a pore distribution measurement apparatus.

After that, a catalyst for exhaust gas purification, which includes an Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Comparative Example 4)

100 g of 1% by weight of barium sulfate-supported alumina of Comparative Example 4 was obtained by performing a similar preparation method as in Example 3, except by changing weight of γ-alumina powder to 99 g and weight of barium sulfate to 1 g. Properties are shown in Table 2.

After that, a catalyst for exhaust gas purification, which includes an Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

### (Comparative Example 5)

In Example 1, BaSo₄/Al₂O₃ was changed to single γ-alumina, and property of the γ-alumina powder is shown in Table 2.

After that, a catalyst for exhaust gas purification, which includes an Rh catalyst layer or Pd-supported BaSO₄/Al₂O₃, was prepared similarly as described above, which was subsequently evaluated by performing a catalyst performance test. Result of the Rh-type catalyst is summarized in evaluation (1) in Table 4, and result of the Pd-type catalyst is summarized in evaluation (2) in Table 5.

**[Table 2]**

| | No. | Al₂O₃ | BaSO₄ | BaSO₄-supported Al₂O₃ | | | | |
|---|---|---|---|---|---|---|---|---|
| | | Average Particle size | Average Particle size | Amount of BaSO₄ | BET | XRD | Pore size | Pore volume |
| | | (µm) | (µm) | (wt%) | (m2/g) | | (nm) | (cc/g) |
| Example | 1 | 35 | 0.1 | 40 | 96 | BaSO₄, γ-Al₂O₃ | 17 | 1.06 |
| | 2 | 35 | 0.15 | 40 | 98 | BaSO₄, γ-Al₂O₃ | 17 | 1.08 |
| | 3 | 0.20 | 1.0 | 5.0 | 135 | BaSO₄, γ-Al₂O₃ | 14 | 1.39 |
| | 4 | 0.20 | 1.0 | 10 | 127 | BaSO₄, γ-Al₂O₃ | 14 | 1.22 |
| | 5 | 0.20 | 1.0 | 20 | 113 | BaSO₄, γ-Al₂O₃ | 14 | 1.00 |
| | 6 | 0.20 | 1.0 | 40 | 84 | BaSO₄, γ-Al₂O₃ | 13 | 0.92 |
| | 7 | 0.20 | 1.0 | 70 | 43 | BaSO₄, γ-Al₂O₃ | 12 | 0.63 |
| | 8 | 0.20 | 0.20 | 40 | 86 | BaSO₄, γ-Al₂O₃ | 14 | 0.89 |
| | 9 | 1.2 | 1.0 | 40 | 88 | BaSO₄, γ-Al₂O₃ | 15 | 0.98 |
| | 10 | 1.2 | 1.0 | 10 | 180 | BaSO₄, γ-Al₂O₃ | 10 | 1.24 |
| | 11 | 1.2 | 1.0 | 40 | 121 | BaSO₄, γ-Al₂O₃ | 10 | 0.93 |
| | 12 | 1.2 | 1.0 | 40 | 61 | BaSO₄, θ-Al₂O₃ | 20 | 0.77 |
| | 13 | 1.2 | 2.0 | 40 | 82 | BaSO₄, γ-Al₂O₃ | 15 | 0.99 |
| | 14 | 1.2 | 0.30 | 40 | 88 | BaSO₄, γ-Al₂O₃ | 12 | 0.90 |
| | 15 | 0.35 | 1.0 | 40 | 61 | BaSO₄, γ-Al₂O₃ | 75 | 1.32 |
| | 16 | 0.10 | 1.0 | 40 | 89 | BaSO₄, γ-Al₂O₃ | 30 | 0.95 |
| | 17 | 0.20 | 0.50 | 40 | 99 | BaSO₄, γ-Al₂O₃ | 11 | 1.66 |
| | 18 | 35 | 0.30 | 40 | 95 | BaSO₄ , γ-Al₂O₃ | 18 | 1.04 |
| Comparative Example | 1 | 35 | (0.1)* | (36)** | 95 | BaCO₃, γ-Al₂O₃ | 18 | 1.02 |
| | 2 | 1.0 | 1.0 | 40 | 2 | BaSO₄, α-Al₂O₃ | none | 0.39 |
| | 3 | 0.20 | 1.0 | 90 | 15 | BaSO₄, γ-Al₂O₃ | none | 0.38 |
| | 4 | 0.20 | 1.0 | 1.0 | 141 | BaSO₄, γ-Al₂O₃ | 17 | 1.49 |
| | 5 | 35 | none | 0 | 147 | γ-Al₂O₃ | 15 | 1.50 |

| | | | | | | | | |
|---|---|---|---|---|---|---|---|---|
| (Footnote) *: Crystallite size of BaCO₃ was shown. **: Supported amount of BaCO₃ was shown. | | | | | | | | |

**[Table 3]**

| | Ba elution rate (%) |
|---|---|
| Example 1 | 8.6 |
| Example 2 | 7.2 |
| Example 6 | 1.2 |
| Example 7 | 4.2 |
| Example 8 | 6.0 |
| Example 9 | 1.0 |
| Example 11 | 0.9 |
| Example 12 | 4.1 |
| Example 13 | 3.8 |
| Example 16 | 0.9 |
| Example 17 | 2.4 |
| Example 18 | 5.2 |
| Comparative Example 1 | 48 |

**[Table 4]**

| | Evaluation (1) NOₓ purification rate |
|---|---|
| Example 1 | 60 |
| Example 2 | 62 |
| Example 3 | 55 |
| Example 4 | 57 |
| Example 5 | 60 |
| Example 6 | 67 |
| Example 7 | 58 |
| Example 8 | 66 |
| Example 9 | 65 |
| Example 10 | 57 |
| Example 11 | 64 |
| Example 12 | 62 |
| Example 13 | 61 |
| Example 14 | 66 |
| Example 15 | 66 |
| Example 16 | 71 |
| Example 17 | 60 |
| Example 18 | 62 |
| Comparative Example 1 | 51 |
| Comparative Example 2 | 44 |
| Comparative Example 3 | 46 |
| Comparative Example 4 | 51 |
| Comparative Example 5 | 49 |

**[Table 5]**

| | Evaluation (2) NOₓ purification rate (%) |
|---|---|
| Example 1 | 76 |
| Example 3 | 81 |
| Example 4 | 86 |
| Example 5 | 83 |
| Example 6 | 79 |
| Example 7 | 70 |
| Example 10 | 85 |
| Example 11 | 72 |
| Example 13 | 77 |
| Example 14 | 80 |
| Example 16 | 79 |
| Example 17 | 79 |
| Example 18 | 75 |
| Comparative Example 2 | 32 |
| Comparative Example 3 | 49 |
| Comparative Example 4 | 66 |
| Comparative Example 5 | 64 |

### [Results and consideration]

As described above, according to Examples 1 to 18, because Ba is immobilized onto the alumina material, as barium sulfate, elution rate of Ba can be suppressed to 9% or less, as is clear from Table 3, as well as denitration performance after catalyzing was good irrespective of the Rh-type or the Pd-type, as is clear from Tables 4 and 5.

Even when amount of barium sulfate to be supported onto alumina is increased up to 40% by weight (Example 6), or 70% by weight (Example 7), elution rate of Ba was 5% or less, as well as denitration performance after catalyzing was good irrespective of the Rh-type or the Pd-type.

In addition, even when average particle size of barium sulfate is decreased down to 0.2 µm (Example 8) and increased up to 2. 0 µm (Example 13), and further even when average particle size of γ-alumina is increased up to 1. 2 µm (Example 9), elusion rate of Ba was 7% or less, and denitration performance after canalization was good irrespective of the Rh-type or the Pd-type.

In addition, even when kind of the alumina material was changed to γ-alumina having high BET specific surface area (Example 11), θ-alumina (Example 12), and boehmite (Examples 16 and 17), elusion rate of Ba was 5% or less, and denitration performance after catalyzing was good irrespective of the Rh-type or the Pd-type.

Still more, even when the barium sulfate-supported alumina having higher pore volume was used (Example 17), denitration performance after catalyzing was good irrespective of the Rh-type or the Pd-type.

It is considered that these high denitration performances are caused because the barium sulfate-supported alumina of the present invention, barium sulfate having an average particle size of 4 µm or smaller is highly dispersed in an amount of 5 to 70% by weight, onto alumina having an BET specific surface area of 20 to 250 m²/g, and an average particle size of 50 µm or smaller.

In addition, from evaluation (1) of Table 4, it is understood that the alumina material having content of barium sulfate over 10% by weight (Examples 1, 3, 5 to 9 and 11 to 18) showed more superior NOₓ purification rate, as compared with those including 10% by weight or lower (Examples 3, 4 and 10).

On the other hand, in trying to support barium acetate onto alumina without using a immobilization agent of a sulfate salt or the like (Comparative Example 1), because barium acetate is easily soluble in water, elution rate of Ba became up to about 50%, as is clear from Table 3, which provided support as barium carbonate onto the catalyst, and also inferior denitration performance. Similarly, the barium sulfate-supported alumina having a small BET specific surface area of 2 m²/g (Comparative Example 2), denitration performance after catalyzing was also bad in both of the Rh-type or the Pd-type.

Additionally, too high supported amount of barium sulfate such as 90% by weight (Comparative Example 3), or too low such as 1% by weight (Comparative Example 4), or no supporting of barium sulfate (Comparative Example 5), provided inferior denitration performance after catalyzing in both of the Rh-type or the Pd-type.

### INDUSTRIAL APPLICABILITY

The catalyst for exhaust gas purification of the present invention is superior in purification performance of, particularly, NOₓ, among carbon monoxide(CO), hydrocarbons (HC), and nitrogen oxides (NOₓ) in exhaust gas discharged from an internal combustion engine of a gasoline engine, a diesel engine or the like. However, the present invention is not limited to automotive applications, and it is applicable widely also to denitration technology of nitrogen oxides in exhaust gas.

## Claims

1. An alumina material containing a barium sulfate in an amount of 5 to 70% by mass to alumina, wherein average particle size of barium sulfate dispersing in the alumina material is 4 µm or smaller, average particle size of alumina is 50 µm or smaller, and BET specific surface area of the alumina material is 20 to 250 m²/g.

2. The alumina material including a barium sulfate according to claim 1, wherein a kind of alumina is any of γ-alumina, δ-alumina, θ-alumina, or boehmite.

3. A catalyst for exhaust gas purification using the alumina material comprising a barium sulfate according to claim 1 or 2.

4. The catalyst for exhaust gas purification according to claim 3, wherein the alumina material comprising a barium sulfate is coated onto an integrated structure-type carrier, as a catalyst layer.

5. The catalyst for exhaust gas purification according to claim 3 or 4, wherein the catalyst layer further contains a noble metal, and the alumina material comprising a barium sulfate is present in the same layer as said noble metal.

6. The catalyst for exhaust gas purification according to claim 5, wherein a kind of the noble metal is one or more kind selected from rhodium, palladium and platinum.

7. The catalyst for exhaust gas purification according to claim 6, wherein rhodium is supported on a porous inorganic oxide different from the alumina material comprising a barium sulfate .

8. The catalyst for exhaust gas purification according to claim 6, wherein palladium and/or platinum is supported on the alumina material comprising a barium sulfate.
